# EUROPÄISCHE PATENTSCHRIFT

(11) **EP 3 535 526 B1**
(45) Veröffentlichungstag und Bekanntmachung des Hinweises auf die Patenterteilung: **06.09.2023**
(21) Anmeldenummer: 17804467.3
(22) Anmeldetag: 07.11.2017
(51) Int. Cl.: F23G 7/06, F23G 5/46, F23G 5/50

(54) **ABLUFTREINIGUNGSVERFAHREN UND ABLUFTREINIGUNGSVORRICHTUNG**
WASTE AIR TREATMENT METHOD AND WASTE AIR TREATMENT DEVICE
PROCÉDÉ DE PURIFICATION D'AIR ÉVACUÉ ET DISPOSITIF DE PURIFICATION D'AIR ÉVACUÉ

(30) Priorität: 07.11.2016 DE 102016221769
(43) Veröffentlichungstag der Anmeldung: 11.09.2019
(73) Patentinhaber: LORATECH AG, 3322 Urtenen-Schönbühl (CH)
(72) Erfinder: ALBRECHT, Tobias, 74199 Untergruppenbach Ortsteil Donnbronn (DE); HERMANN, Stefan, 71717 Beilstein (DE); PFAMMATTER, Daniel, 6926 Montagnola (CH); NEESE, Olaf, 38678 Clausthal-Zellerfeld (DE)
(74) Vertreter: Maikowski & Ninnemann Patentanwälte Partnerschaft mbB
(86) Internationale Anmeldenummer: PCT/EP2017/078379
(87) Internationale Veröffentlichungsnummer: WO 2018/083319

(56) Entgegenhaltungen:
- EP-A1- 1 878 485
- DE-A1-102014 209 924
- US-A1- 2007 079 816
- US-A1- 2011 171 106

## Beschreibung

Die Erfindung betrifft ein Abluftreinigungsverfahren mit den Merkmalen der Anspruchs 1 und Abluftreinigungsvorrichtungen mit den Merkmalen des Anspruchs 6.

Die Reinigung von Abluft (häufig auch Abgas genannt) aus unterschiedlichen Quellen, wie z.B. Lackierereien, Faulgasanlagen, Druckereien oder anderen Industriebetrieben mit VOC-Freisetzung, Härtereianlagen, Lebensmittelverarbeitungsanlagen (z.B. Röstereien), ist insbesondere aus Gründen des Umweltschutzes ein wichtiges Problem. Die Abluft enthält dabei häufig brennbare Komponenten, wie z.B. flüchtige organische Substanzen (VOC: volatile organic compounds), die schädlich für die Umwelt sind, wohl aber einen gewissen Brennwert haben. Dokument DE102014209924A1 offenbart ein Abluftreinigungsverfahren gemäß dem Stand der Technik.

Es werden daher Abluftreinigungsverfahren und Abluftreinigungsvorrichtungen benötigt, die eine energieeffiziente Reinigung von Abluftmengen ermöglichen.

Die Aufgabe wird durch ein Abluftreinigungsverfahren mit den Merkmalen des Anspruchs 1 gelöst.

Dabei wird ein Abluftstrom, insbesondere ein Abluftstrom aus einer Lackiererei, einer Druckerei oder einer Lebensmittelverarbeitungsanlage, mit mindestens einer brennbaren Komponente in eine Abluftreinigungsvorrichtung geleitet, wobei die Abluftreinigungsvorrichtung mindestens eine Turbinenvorrichtung mit einer Brennkammer zur Erzeugung von elektrischen Strom, eine der Turbinenvorrichtung vorgeschaltete Adsorptions-Desorptionsvorrichtung, die als Rotationsadsorber ausgelegt ist, mit einem Adsorptionsteil, einer Kühlzone und einem Desorptionsteil, einen ersten Wärmetauscher, einen zweiten Wärmetauscher und einem der Turbinenvorrichtung nachgeschalteten Katalysator umfasst.

Das Verfahren umfasst die folgenden Schritte:
- Einführen eines Großteils des Abluftstroms in den Adsorptionsteil zur Reinigung, der nach der Reinigung die Anlage als Reingas über den Kamin verlässt;
- Einführen des kleineres Teil des Abluftstroms in die Kühlzone des Desorptionsteil zur Kühlung des Desorptionsteiles, der nach Verlassen der Kühlzone in dem ersten Wärmetauscher durch Katalysatorreingas aus dem Katalysator erwärmt wird;
- Durchführen des im Wärmetauscher erwärmten Stroms durch den Desorptionsteil, wobei die brennbare Komponente im Desorbat angereichert wird;
- Abkühlen des erwärmten, mit der brennbaren Komponente angereicherten Desorbates in dem zweiten Wärmetauscher und anschließender Wiedererwärmung;
- Verbrennen des Desorbats als erster Fluidstrom zusammen mit Brennstoff in der Brennkammer der Turbinenvorrichtung, wodurch die Turbinenvorrichtung zur Erzeugung von elektrischem Strom angetrieben wird;
- Reinigung des Abgases der Turbinenvorrichtung im Katalysator,
wobei Volumenstromschwankungen durch eine Zuluftregelung L ausgeglichen werden.

Dieses Verfahren erlaubt eine Kraft-Wärme-Kopplung, die zwar einen erhöhten maschinellen Aufwand bedingt, bei denen aber erhebliche Erträge durch die zusätzliche Stromerzeugung realisiert werden können. Die Stromerzeugung kann dabei als Nebenprodukt der Abluftreinigung, d.h. bei ungeregeltem Strom betrieben werden. Typische Anwendungen für das Verfahren ist die Verarbeitung von Abluft aus einer Lackiererei, einer Druckerei oder einer Lebensmittelverarbeitungsanlage.

Auch kann in einer weiteren Ausführungsform des Verfahrens die Oxidationsvorrichtung, insbesondere die thermische Nachverbrennungsvorrichtung und / oder die regenerative Nachverbrennungsvorrichtung, zusätzlich mit Hilfsenergie, insbesondere einem brennbaren Energieträger, ganz insbesondere Erdgas, betrieben werden.

Der Dampfstrom aus der Dampferzeugervorrichtung kann in einer Ausführungsform einem Kondensator oder einem Wärmetauscher (z.B. einem Umformer Dampf / Wasser / Wärmeträgeröl) zugeführt werden. Es ist somit nicht zwingend, dass der austretende Dampf vollständig kondensiert wird. Auch ist es möglich, das anfallende Kondensat extern weiter zu verwerten, z.B. in einer Fernwärmeanlage, in einer Kälteanlage oder zur Beheizung in Prozessen z. B einer kathodischen Tauchlackierungsanlage (KTL) oder zur Beheizung von chemischen Vorbehandlungsprozessen, Trocknern (z.B. KTL Trockner, Beheizung von Spritzkabinen und beheizbare Nebenaggregate).

In einer weiteren Ausführungsform dient eine Regelvorrichtung oder Steuervorrichtung zur Konstanthaltung des Volumenstroms und / oder des Abgasstroms der Oxidationsvorrichtung, insbesondere unter Verwendung eines Brennstoffstroms oder eines Frischluftstroms als Stellgröße. Alternativ oder zusätzlich kann auch die Temperatur der Oxidationsvorrichtung konstant gehalten werden, z.B. auf eine Reaktionstemperatur von 800°C.

Wenn eine Adsorptions-Desorptionsvorrichtung oder eine Absorptions-Desorptionsvorrichtung verwendet wird, kann in einer weiteren Ausführungsform mit einer Regelvorrichtung oder Steuervorrichtung der Volumenstrom und / oder die Temperatur für den Desorptionsstrom konstant gehalten werden.

Es ist auch möglich, dass der Abluftstrom vorgewärmt wird, z.B. mit einem anderen heißen Prozessstrom.

Ferner ist es möglich den Ausgangsfluidstrom nach der Oxidationsvorrichtung über einen Wärmetauscher zu führen. Die dabei abgegebene Wärme wird dann in einer Trocknervorrichtung, insbesondere in einer Lackiererei verwendet.

Die Aufgabe wird auch durch Abluftreinigungsvorrichtung mit den Merkmalen des Anspruchs 6 gelöst.

Anhand von beispielhaften Ausführungsformen werden die Überwachungsvorrichtung und das Überwachungssystem in den folgenden Figuren beschrieben. Dabei zeigt
- Fig. 1: eine erste Ausführungsform einer Abluftreinigungsvorrichtung und eines Abluftreinigungsverfahrens mit einer Oxidationsvorrichtung, einem Dampferzeuger und einer Turbinenvorrichtung zur Stromerzeugung;
- Fig. 2: eine zweite Ausführungsform einer Abluftreinigungsvorrichtung und eines Abluftreinigungsverfahrens mit einer Brennkammer einer Turbinenvorrichtung, wobei ein Fluidstrom mit brennbaren Komponenten in die Brennkammer eingedüst wird;
- Fig. 3: eine dritte Ausführungsform einer Abluftreinigungsvorrichtung und eines Abluftreinigungsverfahrens mit einer thermischen Nachverbrennungsvorrichtung (rekuperative Nachverbrennung) als Oxidationsvorrichtung;
- Fig. 4: eine vierte Ausführungsform einer Abluftreinigungsvorrichtung und eines Abluftreinigungsverfahrens mit einer Nachverbrennungsvorrichtung als Oxidationsvorrichtung und einer vorgeschalteten Adsorber-Desorbervorrichtung;
- Fig. 5: eine fünfte Ausführungsform einer Abluftreinigungsvorrichtung und eines Abluftreinigungsverfahrens mit einer regenerativen Nachverbrennungsvorrichtung als Oxidationsvorrichtung;
- Fig. 6: eine sechste Ausführungsform einer Abluftreinigungsvorrichtung und eines Abluftreinigungsverfahrens mit einer Eindüsung eines Fluidstroms mit brennbaren Komponenten in die Brennkammer der Turbinenvorrichtung;
- Fig. 7: eine erfindungsgemäße Ausführungsform einer Abluftreinigungsvorrichtung und eines Abluftreinigungsverfahrens mit einer Eindüsung eines brennbaren Fluidstroms und einer Erdgaszuführung in den Brenner der Turbinenvorrichtung:
- Fig. 8: eine Ausführungsform einer Reglerstruktur für die Ausführungsform einer Abluftreinigungsvorrichtung und eines Abluftreinigungsverfahrens mit einer regenerativen Nachverbrennungsvorrichtung als Oxidationsvorrichtung;
- Fig. 9: eine Ausführungsform einer Reglerstruktur für die Ausführungsform einer Abluftreinigungsvorrichtung und eines Abluftreinigungsverfahrens mit einer rekuperativen Nachverbrennungsvorrichtung;
- Fig. 10: eine Ausführungsform einer Reglerstruktur für die Ausführungsform einer Abluftreinigungsvorrichtung und eines Abluftreinigungsverfahrens mit einer Nachverbrennungsvorrichtung als Oxidationsvorrichtung und einer vorgeschalteten Adsorber-Desorbervorrichtung;
- Fig. 11: eine weitere Ausführungsform einer Abluftreinigungsvorrichtung und eines Abluftreinigungsverfahrens.

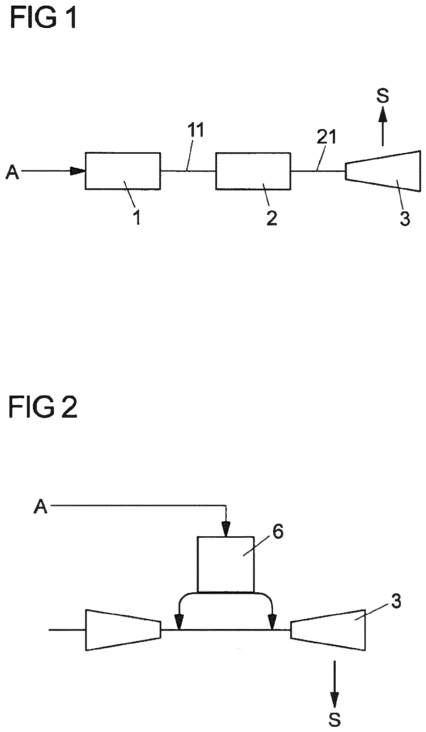

In den Fig. 1 und 2 sind zwei Grundausführungsformen zur Reinigung eines Abluftstroms A dargestellt. Beiden Ausführungsformen ist gemeinsam, dass im Rahmen der Abluftreinigung mittels einer Turbinenvorrichtung 3 elektrischer Strom S erzeugt wird, wobei hier der von der Turbinenvorrichtung 3 angetriebene Generator aus Gründen der Einfachheit nicht dargestellt ist. Die Energie für die Stromerzeugung wird dabei durch eine Oxidation bereitgestellt, die entweder in einer separaten Oxidationsvorrichtung 1 (z.B. einem Brenner oder in einer thermischen Nachverbrennung) erfolgt oder direkt in einer Brennkammer 6 der Turbinenvorrichtung 3.

In der ersten Ausführungsform (Fig. 1) wird ein Abluftstrom A, der mindestens eine brennbare Komponente enthält, der Oxidationsvorrichtung 1 zugeführt. Bei der Oxidation der brennbaren Komponenten entsteht ein heißer Abgasstrom 11, der als erster Fluidstrom einer Dampferzeugungsvorrichtung 2 zugeführt wird. Mithilfe der zugeführten Energie wird in der Dampferzeugungsvorrichtung 2 ein Dampfstrom als zweiter Fluidstrom 21 zeugt, der dann der Turbinenvorrichtung 3 zugeführt wird.

In der zweiten Ausführungsform (Fig. 2) wird der Abluftstrom A, der mindestens eine brennbare Komponente enthält, aufbereitet (siehe Ausführungsbeispiele dazu weiter unten), dass er direkt der Brennkammer 6 der Turbinenvorrichtung 3 zugeführt wird. Die Oxidation des Abluftstroms A erfolgt damit in der Brennkammer 6 direkt, so dass kein Dampferzeuger zwischengeschaltet ist.

Damit sind Kraft-Wärme-Kopplungen möglich, d.h. die Gewinnung von mechanischer Energie mit einer Erzeugung von elektrischem Strom und der Gewinnung von Nutzwärme. Es ist möglich, dass in einer hier nicht dargestellten Ausführungsform der Abluftstrom A vorgewärmt wird.

In der Folge werden weitere Ausführungsformen dargestellt, wobei einzelne Verfahrensschritte oder Vorrichtungen aus den einzelnen Ausführungsformen auch mit anderen Ausführungsformen kombinierbar sind. Wenn im Folgenden Zahlenwerte für bestimmte Prozessparameter (z.B. Temperaturen, Volumenströme (immer bezogen auf Normbedingungen), Beladungen etc.) angegeben werden, so sind diese lediglich beispielhaft und als zeitliche Mittelwerte zu verstehen.

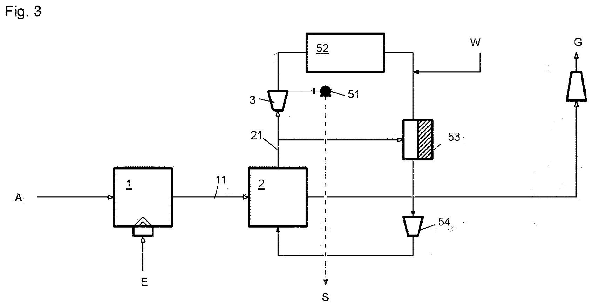

In Fig. 3 ist eine Ausführungsform für ein Abluftreinigungsverfahren und eine Abluftreinigungsvorrichtung dargestellt, die eine Weiterbildung der Ausführungsform gemäß Fig. 1 ist.

In der Ausführungsform gemäß Fig. 3 wird ein Abluftstrom A (Volumenstrom 6.000 m³/h, Temperatur von weniger als 150°C, Beladung von 500 mg/m³ VOC als brennbaren Komponenten) aus einem oder mehreren Trocknern (hier nicht dargestellt) abgesaugt und einer Kraftwärmekopplung mit einer thermischen Nachverbrennung zugeführt.

Der Abluftstrom A wird einer Oxidationsvorrichtung 1, nämlich der thermischen Nachverbrennungsvorrichtung 1 zugeführt, die zusätzlich noch mit einem Erdgasstrom E als Hilfsenergie betrieben wird. In der thermischen Nachverbrennung wird der Abluftstrom A mit den VOC bei Temperaturen bei ca. 800°C oxidiert und zu CO₂ und H₂O umgesetzt.

Der heiße Abluftstrom der thermischen Nachverbrennung 1 wird nun als erster Fluidstrom 11 auf eine Dampferzeugungsvorrichtung 2 geführt. In dieser wird Wasser unter Druck verdampft und anschließend überhitzt. Der überhitzte Dampf wird dann als zweiter Fluidstrom 21 zum Antrieb einer Turbinenvorrichtung 3 (d.h. einer Dampfturbine) genutzt. Der Generator 51 ist mit der Turbinenvorrichtung 3 gekoppelt und erzeugt den elektrischen Strom S.

Der abgekühlte erste Fluidstrom 11 verlässt die Dampferzeugungsvorrichtung 2 als Reingasstrom G.

Nachdem der Dampf in der Turbinenvorrichtung entspannt wurde, wird dieser mittels eines Kondensators 52 kondensiert, in einem Entgaser 53 entgast und in einer Pumpvorrichtung 54 und erneut der Dampferzeugungsvorrichtung 2 zugeführt. Dem Kondensat kann Kesselspeisewasser K zugefügt werden. Auch ist es möglich, dass ein Teil des Dampfstroms (d.h. ein Teil des zweiten Fluidstroms 21) abgezweigt wird und zur Beheizung des Entgasers 53 verwendet wird.

Alternativ ist es auch möglich, einen Teil des Dampfstroms als Energieträger einer anderen Einheit oder einem anderen Prozess zur Verfügung zu stellen. In einem solchen Fall kann anstelle des Kondensators ein Wärmetauscher verwendet werden.

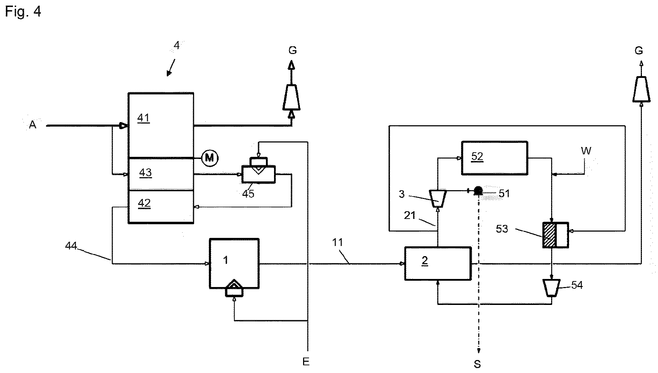

Auch die in Fig. 4 dargestellte Ausführungsform ist eine Variante der Ausführungsform gemäß Fig. 1. Der Abluftstrom A aus einer oder mehreren Lackierkabinen einer Autolackiererei ist hier mit 80.000 m³/h wesentlich größer als bei der Ausführungsform gemäß der in Fig. 3 dargestellten Ausführungsform. Die Temperatur ist hier kleiner 30° C und die Beladung mit VOC beträgt 500 mg/m³ VOC.

Bevor hier eine thermische Nachverbrennung in der Oxidationsvorrichtung 1 erfolgt, wird der Abluftstrom A in einer Adsorptions-Desorptionsvorrichtung 4 vorbehandelt. Dabei wird ein an sich bekannter, durch einen Motor M angetriebener Rotationsadsorber 4 verwendet, der besonders für große Gasdurchsätze geeignet ist. Bei einem Rotationsadsorber 4 ist ein zylindrisch aufgebautes Festbett in tortenförmige Segmente unterteilt. Durch eine langsame Rotationsbewegung um die Zylinderachse wird diese so bewegt, dass einzelne Segmente regeneriert werden, während der zu reinigende Abluftstrom A durch den größten Teil des Zylinderquerschnitts geführt wird. Rotationsadsorber 4 werden sowohl mit horizontaler als auch mit vertikaler Rotationsachse gebaut.

In der hier dargestellten Ausführungsform wird der Abluftstrom A in der Adsorptionszone 41 des Rotationsadsorbers 4 von den VOC befreit bzw. auf < 50 mg C/Nm³ reduziert.

Der Abscheidemechanismus (Abscheidung der VOC-Anteile in der Abluft) beruht auf einer Adsorption, d.h. die VOC lagern sich an der Oberfläche der Adsorptionszone 41 an. In der Desorptionszone 42 des Rotationsadsorbers 4 werden die adsorbierten VOCs wieder entfernt. Hierfür wird ein (im Verhältnis zur Abluft) kleiner Luftstrom aus der Kühlzone 43 des Rotationsadsorbers durch einen Flächenbrenner 45 erhitzt (auf ca. 200°C) und in der Desorptionszone 42 durch den Rotationsadsorber 4 geführt. Die VOC, welche zuvor aus der Abluft entfernt wurden, befinden sich nun im kleinen Abgasstrom 44 der Desorption. Dieser ist bis zu 30-fach kleiner als der Abluftstrom A. Der hier verwendete Flächenbrenner 45 und die thermische Nachverbrennungsvorrichtung 1 werden durch Erdgas E beheizt bzw. zusätzlich beheizt. In einer alternativen Ausführungsform wird anstelle des Flächenbrenners 45 oder in Ergänzung dazu die Erwärmung der Desorptionsluft durch die Abwärme eines heißen Abgases oder durch Dampf realisiert. Dazu kann z.B. auch Dampf aus einem anderen Teil des Prozesses (z. B. aus der Dampferzeugervorrichtung 2) verwendet werden.

Der mit VOC angereicherte Abgasstrom 44 wird nun in eine speziell konfigurierte thermische Nachverbrennung als Oxidationsvorrichtung 1 geleitet und dort bei Temperaturen bei ca. 800 °C zu CO₂ und H₂O umgesetzt.

Die heiße Abluft der thermischen Nachverbrennungsvorrichtung 1 wird als erster Fluidstrom 11 nun zu einer Dampferzeugungsvorrichtung 2 geführt. In dieser wird Wasser unter Druck verdampft und anschließend überhitzt. Der überhitzte Dampf wird als zweiter Fluidstrom 21 dann zum Antrieb der Turbinenvorrichtung 3 genutzt. Der elektrische Strom S wird durch den Generator 51 erzeugt, der mit der Turbinenvorrichtung 3 gekoppelt ist.

Nachdem der Dampf in der Turbinenvorrichtung 3 entspannt wurde, wird dieser mittels eines Kondensators 52 kondensiert, im Entgaser 53 entgast und über eine Pumpvorrichtung 54 der Dampferzeugungsvorrichtung 2 zugeführt. Der Entgaser 53 wird in der hier dargestellten Ausführungsform durch einen Dampfstrom beheizt, der vom zweiten Fluidstrom 21 abgezweigt wurde. Dem Kondensatstrom aus dem Kondensator 52 kann auch noch Wasser W hinzugefügt werden.

Die gereinigte Abluft G verlässt das Abluftreinigungsverfahren oder die Abluftreinigungsvorrichtung aus der Adsorptionszone 41 und der Dampferzeugungsvorrichtung 2.

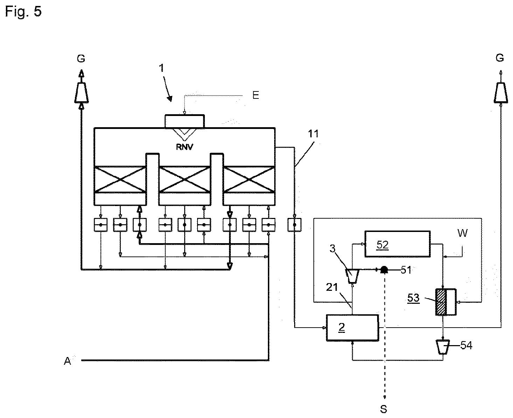

In Fig. 5 ist eine weitere Ausführungsform des Abluftreinigungsverfahrens und der Abluftreinigungsvorrichtung dargestellt. Hier wird ein Abluftstrom A aus einer oder mehreren Lackierkabinen behandelt (Volumenstrom 35.000 m³/h, Temperatur < 30°C und Beladung 2000 mg/m³ VOC).

Als Oxidationsvorrichtung 1 wird hier eine an sich bekannte regenerative Nachverbrennungsvorrichtung (RNV) verwendet, in der die VOC der Abluft bei einer Temperatur von ca. 850 °C zu CO₂ und H₂O umgesetzt werden. Bei einer regenerativen Nachverbrennungsvorrichtung 1 gibt der behandelte Abluftstrom A seine Wärme an einen Regenerator ab, der seinerseits den unbehandelten Abluftstrom A aufwärmt, was den Energiebedarf der Verbrennung verringert. Der Regenerator wird abwechselnd von behandelter und unbehandelter Abluft durchströmt. Des Weiteren weist die regenerative Nachverbrennungsvorrichtung eine Wärmespeichermasse auf.

Über einen heißen By-Pass als ersten Fluidstrom 11 wird aus der auch mit Erdgas E beheizten Brennkammer 6 der regenerativen Nachverbrennungsvorrichtung 1 ein Teilstrom dem Abluftstrom A entnommen (z.B. bis zu 20% der Abluftmenge).

Der aus der Brennkammer 6 entnommene erste Fluidstrom 11 wird nun der Dampferzeugungsvorrichtung 2 zugeführt. In dieser wird Wasser unter Druck verdampft und anschließend überhitzt. Der überhitzte Dampf wird als zweiter Fluidstrom 21 dann zum Antrieb einer Dampfturbine, d.h. der Turbinenvorrichtung 3, genutzt. Die Erzeugung des elektrischen Stroms S erfolgt über den Generator 51, der mit der Turbinenvorrichtung 3 gekoppelt ist.

Der Entgaser 53 wird in der hier dargestellten Ausführungsform durch einen Dampfstrom beheizt, der vom zweiten Fluidstrom 21 abgezweigt wurde. Dem Kondensatstrom aus dem Kondensator 52 kann auch noch Wasser W hinzugefügt werden.

Nachdem der Dampf in der Turbinenvorrichtung 3 entspannt wurde, wird dieser mittels Kondensator 52 kondensiert, mittels Entgaser 53 entgast, mittels der Pumpvorrichtung 54 im Druck erhöht und erneut der Dampferzeugungsvorrichtung 2 zugeführt.

Die gereinigte Abluft G verlässt das Abluftreinigungsverfahren oder die Abluftreinigungsvorrichtung aus der Oxidationsvorrichtung 1 und der Dampferzeugungsvorrichtung 2.

Die hier dargestellten Kraft-Wärme-Kopplungen können als Komplettpaket mit den jeweiligen Oxidationsvorrichtungen 1 oder als Retrofit-Lösung für bestehende Anlagen ausgeführt werden.

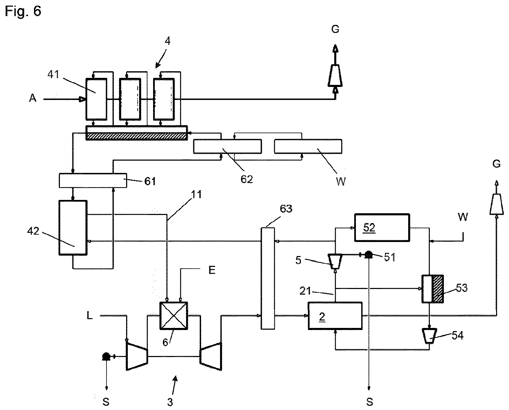

In Fig. 6 ist eine weitere Ausführungsform eines Abluftreinigungsverfahrens und einer Abluftreinigungsvorrichtung dargestellt. Hier wird ein aus dem Abluftstrom A resultierender erster Fluidstrom 11 mit mindestens einer brennbaren Komponente einer Brennkammer 6 der ersten Turbinenvorrichtung 3 zugeführt. Diese dient damit der Erzeugung von elektrischem Strom S.

Diesem Schritt geht eine Vorbehandlung des Abluftstroms A voraus, die im Folgenden beschrieben wird.

Der Abluftstrom A (z.B. Volumenstrom von 80.000 m³/h, Temperatur kleiner 30°C und Beladung 150 mg/m³ VOC) wird aus einer oder mehreren Lackierkabinen (hier nicht dargestellt) abgesaugt und zu einer Absorptions-Desorptionsvorrichtung 4 geleitet.

Bei der Absorption werden die VOC aus dem Abluftstrom A entfernt und in einer Waschflüssigkeit gespeichert.

Die mit VOC beladene Waschflüssigkeit wird kontinuierlich aus dem Absorptionsteil 41 entnommen und dem Absorptionsteil 42 (hier einer Kolonne) zugeführt. In diesem werden die VOC mit Dampf aus der Waschflüssigkeit ausgetrieben. Die gereinigte Waschflüssigkeit kann anschließend erneut im Absorptionsteil 41 der Absorptions-Desorptionsvorrichtung 4 verwendet werden. Die in den Desorptionsteil 42 eintretende Waschflüssigkeit wird vor dem Eintritt über einen ersten Wärmetauscher 61 geleitet. Die gereinigte Waschflüssigkeit wird dann wieder über den ersten Wärmetauscher 61 geführt, bevor sie - nach weiterer Kühlung durch Wasser W in einem zweiten Wärmetauscher 62 - in den Absorptionsteil 41 der Absorptions-Desorptionsvorrichtung 4 geführt wird.

Der mit VOC angereicherte Dampfstrom wird als erster Fluidstrom 11 nach der Desorption in die Brennkammer 6 einer speziell konfigurierten Gasturbine als erster Turbinenvorrichtung 3 eingedüst. Durch den VOC-Anteil kann der Erdgasbedarf E in der ersten Turbinenvorrichtung 3 erheblich reduziert werden, ferner senkt der Wasseranteil die NOx Konzentration am Austritt der ersten Turbinenvorrichtung 3. Im Idealfall können hierdurch sogar die gesetzlichen Abgasgrenzwerte für Turbinenabgase eingehalten bzw. unterschritten werden.

Die heißen Abgase der ersten Turbinenvorrichtung 3 werden zunächst über einen dritten Wärmetauscher 63 geführt, mit welchem der Stripp-Dampf für den Desorptionsteil (Desorptionskolonne) 42 erhitzt wird. Anschließend wird das Abgas in die Dampferzeugervorrichtung 2 geleitet.

In dieser wird Wasser unter Druck verdampft und anschließend überhitzt. Der überhitzte Dampf wird dann zum Antrieb einer Dampfturbine als zweiter Turbinenvorrichtung 5 genutzt. Nachdem der Dampf in der zweiten Turbinenvorrichtung 5 entspannt wurde, wird dieser mittels des Kondensators 52 kondensiert, im Entgaser 53 entgast und mittels der Pumpvorrichtung 54 erneut der Dampferzeugervorrichtung 2 zugeführt. Vor der Kondensation im Kondensator 52 wird ein Teilstrom des Dampfs entnommen und - über den dritten Wärmetauscher 63 - zum Desorptionsteil 42 geführt. Damit kann der Stripp-Dampf zumindest teilweise aus dem Prozess gewonnen werden, wobei dieser für die Desorption entnommene Dampf über eine Kesselwasserspeiseanlage aufbereitet und nachgefüllt werden (hier nicht dargestellt) muss.

Es ist alternativ oder zusätzlich auch möglich, dass der Stripp-Dampf direkt aus dem Dampferzeuger 2 abgezweigt wird. Der restliche Dampf wird dann über die zweiter Turbinenvorrichtung 5 geführt.

Die gereinigte Abluft G verlässt das Abluftreinigungsverfahren oder die Abluftreinigungsvorrichtung aus dem Absorberteil 41 und der Dampferzeugungsvorrichtung 2.

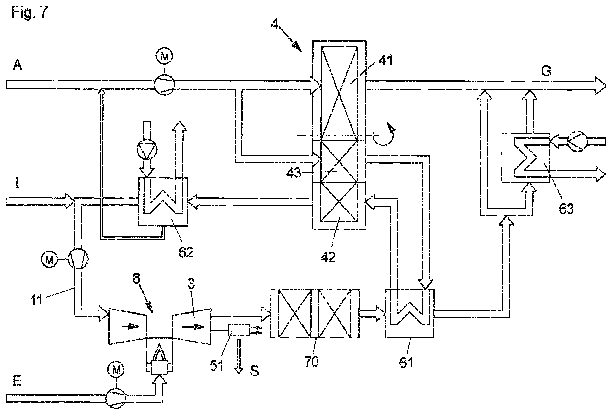

In der Fig. 7 sind ein Abluftreinigungsverfahren und eine Abluftreinigungsvorrichtung gemäß der Erfindung beschrieben, bei der ebenfalls eine Eindüsung eines ersten Fluidstroms 11 mit brennbaren Komponenten in die Brennkammer 6 einer Turbinenvorrichtung 3 (auch als Mikrogasturbine bezeichnet) beschrieben wird. Hierbei sind eine Adsorptions-Desorptionsvorrichtung 4 vorgeschaltet und eine katalytische Nachbehandlung 70 nachgeschaltet.

Der hier behandelte Volumenstrom des Abluftstroms A beträgt 35.000 m³/h (Normbedingungen) mit einer Beladung mit brennbaren Komponenten von im Mittel ca. 300 mgC/m³ (Spitzenkonzentrationen von mehr als 1000 mgC/m³ sind möglich).

Ein Großteil des Abluftstroms A wird in dem Adsorptionsteil 41 der Adsorptions-Desorptionsvorrichtung 4 (hier als Rotationsadsorber ausgelegt) gereinigt und verlässt die Anlage als Reingas G über den Kamin.

Der kleinere Teil (entsprechend einer Aufkonzentration im Verhältnis von z.B. 1 : 15) kühlt zunächst den Desorptionsteil 42 des Rotationsadsorbers 4, wird anschließend in einem ersten Wärmetauscher 61 durch Katalysatorreingas aus dem Katalysator 70 erwärmt und nimmt dann in der Desorptionszone 42 des Rotationsadsorbers 4 die Lösemittel auf.

Das so entstandene Desorptionsgas muss von Kondensat befreit werden, damit es die Turbinenvorrichtung 3 nicht schädigt. Dies geschieht innerhalb einer Konditionierungsstufe durch Abkühlen in einem zweiten Wärmetauscher 62 und anschließender Wiedererwärmung, z.B. nach dem Rotor oder einem Lüftungswerk zwischen dem Rotationsadsorber 4 und der Turbinenvorrichtung 3.

Da die Turbinenvorrichtung 3 einen konstanten Luftstrom benötigt, werden Volumenstromschwankungen durch eine Zuluftregelung L ausgeglichen. In der Mikrogasturbine der Turbinenvorrichtung wird das kondensierte Desorbat als erster Fluidstrom 11 zusammen mit Erdgas E verbrannt und elektrische Energie S gewonnen. Anschließend wird das Abgas im Katalysator 70 auf die geforderten Emissionswerte gereinigt. Die Restwärme des Turbinenabgases dient der Aufheizung des Desorptionsgases im ersten Wärmetauscher 61 und der Wärmeerzeugung der Produktion über ein Heißwassersystem 63.

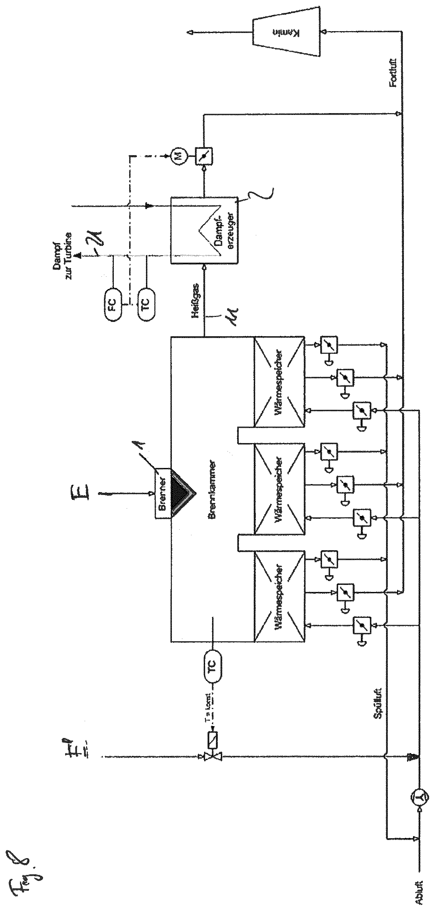

In Fig. 8 ist eine Ausführungsform für ein Regelkonzept dargestellt, das in Zusammenhang mit einer Ausführungsform gemäß Fig. 5 eingesetzt werden kann.

Mit dem Brenner 1 wird das System gestartet bzw. hochgefahren. Sobald das System auf Betriebstemperatur ist, wird die Brennkammertemperatur über das beimischen von Erdgas zur Abluft konstant gehalten (flammlose Verbrennung). Über eine Heißgasausschleusung aus der Brennkammer (Heißer-By-Pass) wird Wärmeenergie für den Dampfprozess entnommen. Hierfür können maximal 20% der Abluftmenge entnommen werden. Die entnommene Menge richtet sich nach dem Strombedarf, welcher über die Turbine 3 (in Fig. 8 nicht dargestellt) abgedeckt werden soll. Da die Systeme i.d.R. so ausgelegt werden, dass lediglich die Grundlast an Strom des Betreibers gedeckt wird, ist eine dynamische Regelung nicht erforderlich und der Volumenstrom des Heißgases 11 über den heißen By-Pass wird konstant gehalten.

Schwankungen in der Beladung (VOC Konzentration) der Ablauft werden über einen Brennstoffstrom E' als Stellgröße ausgeglichen, so dass ein konstanter Heißgasstrom 11 entnommen werden kann.

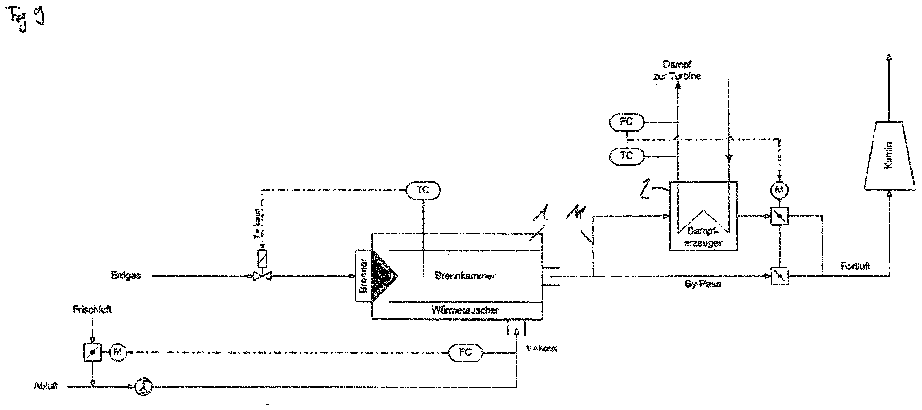

In Fig. 9 ist eine Ausführungsform für ein Regelkonzept für die Variante mit einer rekuperativen Nachverbrennung (TNV) dargestellt, wie dies im Zusammenhang mit der Fig. 3 dargestellt ist.

Die Abluft wird in einer TNV als Oxidationsvorrichtung 1 gereinigt. Die heiße Abluft 11 (d.h. ein erster Fluidstrom) nach der TNV wird über eine Dampferzeugervorrichtung 2 geführt und verlässt das System durch einen Kamin an die Umwelt. Die Turbine 3 (in Fig. 9 nicht dargestellt) ist analog zu der vorherigen Variante auf die Grundlast des Kunden dimensioniert.

Sollte die thermische Energie in der Abluft nicht ausreichen, kann entweder nur eine Teillast des Strombedarfs gedeckt werden oder über das Beimischen von Frischluft (Stellgröße) zum Abgasstrom der Volumenstrom angepasst werden, welcher zur Oxidation geführt wird.

Sollte mehr thermische Energie zur Verfügung stehen, kann diese über einen By-Pass an der Dampferzeugervorrichtung 2 vorbeigeführt werden. Über den Brenner 1 an der TNV wird die Temperatur konstant gehalten.

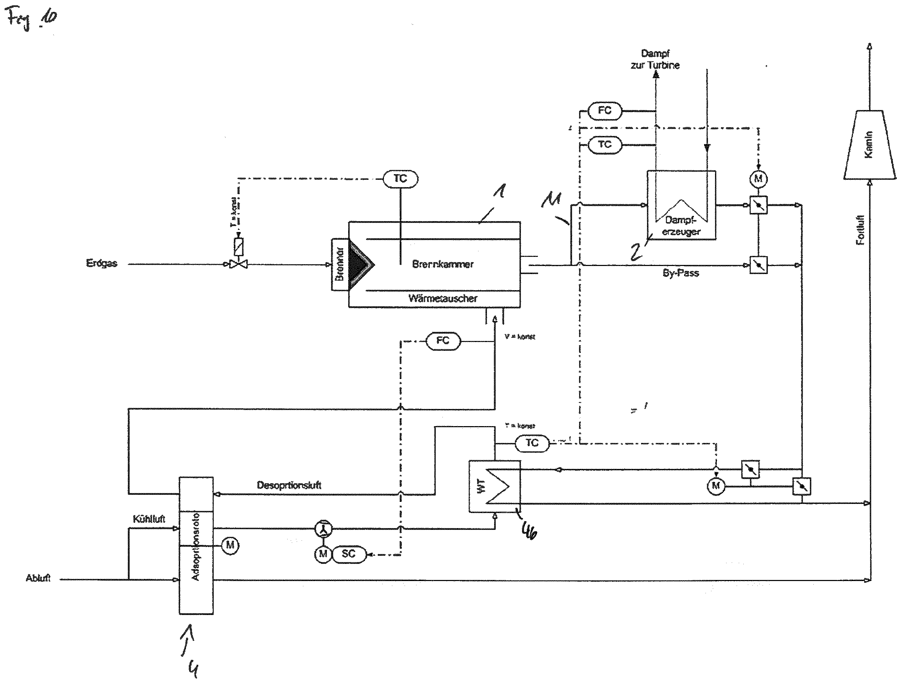

In Fig. 10 ist eine Ausführungsform für ein Regelkonzept dargestellt, das im Zusammenhang mit einer Ausführungsform einer Abluftreinigungsvorrichtung und eines Abluftreinigungsverfahrens mit einer Nachverbrennungsvorrichtung als Oxidationsvorrichtung und einer vorgeschalteten Adsorber-/Desorbervorrichtung 4 verwendbar ist.

Ein solches Verfahren ist im Zusammenhang mit der Fig. 4 beschrieben. Allerdings wird abweichend von der Anlage in Fig. 4, in der Ausführungsform gemäß Fig. 10 ein Wärmetauscher 46 zur Aufheizung der Desorptionsluft anstelle des Flächenbrenners 45 eingesetzt. Es ist grundsätzlich auch möglich, das Verfahren gemäß Fig. 4 mit einem Wärmetauscher 46 anstelle eines Flächenbrenners 45 zu betreiben.

In Fig. 10 wird ein analoges Regelverhalten wie bei dem Regelkonzept gemäß Fig. 9 angesetzt.

Ein Unterschied liegt darin, dass der Volumenstrom zur TNV 1 bzw. die Desorptionsluft des Adorptionsrotors der Adsorptions-Desorptionsvorrichrtung 4 konstant gehalten werden muss.

Ein erster Regelkreis, der die obere Priorität hat, stellt auch sicher, dass die Austrittstemperatur des Wärmetauschers

Die Zieltemperatur der Desorptionsluft hat dabei eine höhere Priorität, als die Stromerzeugung. Daher wird durch einen zweiten Regelkreis - mit einer entsprechend niedrigeren Temperatur - immer so viel Luft über den By-Pass des Dampferzeugers 2 geführt, wie erforderlich ist um die Desorptionsluft zu erhitzen.

Die restliche Energie wird über den Dampferzeuger 2 in Dampf und anschließend über die Turbine (in Fig. 10 nicht dargestellt) in Strom umgewandelt.

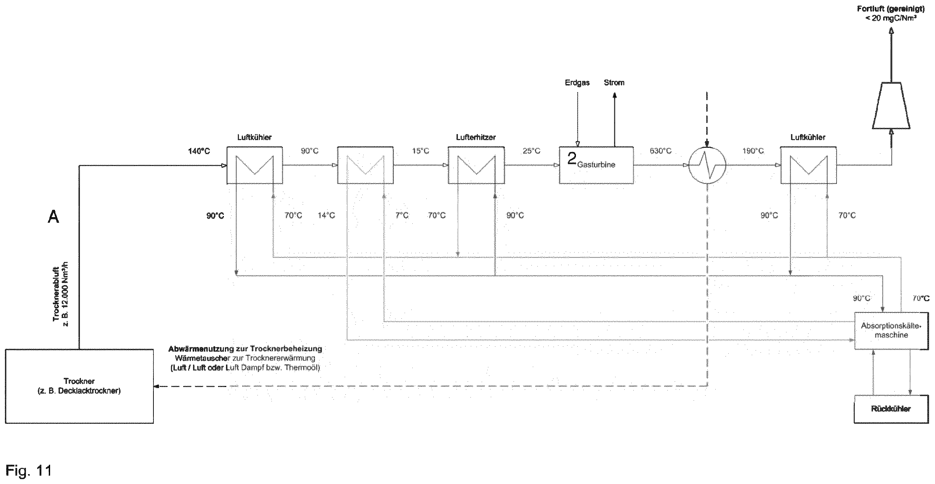

In Fig. 11 ist eine weitere Ausführungsform eines Abluftreinigungsverfahren mit einer Oxidationsvorrichtung 2 für einen Abluftstrom A dargestellt. Es handelt sich dabei um eine Variante der Ausführungsform, die in Fig. 2 dargestellt ist. Alle Zahlenangaben in der Fig. 11, betreffend Temperaturen und den Volumenstrom sind lediglich beispielhaft zu verstehen.

Der Abluftstrom A stammt in der dargestellten Ausführungsform aus einer Trockneranlage, z.B. einer Decklacktrockneranlage aus einer Automobilfertigung. Hier fällt ein Abluftstrom vom 12.000 Normkubikmetern pro Stunde an. Grundsätzlich könnte auch ein Abluftstrom A aus anderen kontinuierlich arbeitenden Trockneranlagen verwendet werden.

Der Abluftstrom A wird hier in mehreren Stufen von 140°C auf 25°C gekühlt. Dabei wird eine mehrstufige Wärmetauscherschaltung verwendet. Die Wärmetauscher sind hier als Luftkühler oder Lufterhitzer ausgebildet, wobei grundsätzlich auch andere Wärmetauschertypen und -medien einsetzbar sind.

In der ersten Stufe, einem Luftkühler, erfolgt eine Wärmerückgewinnung im Zusammenwirken mit einer dritten Stufe, einem Lufterhitzer.

Der Abluftstrom A wird in der ersten Stufe von 140°C auf 90°C abgekühlt. Das entsprechende Kühlmedium Luft wird dabei von 70°C auf 90°C aufgeheizt.

In der zweiten Stufe wird der Abluftstrom von 90°C auf 15°C abgekühlt, wobei das Kühlmedium (hier Wasser) von einer Adsorptionskältemaschine stammt. Das Kühlmedium heizt sich dabei von 7°C auf 14°C auf.

In der dritten Stufe der Wärmetauschervorrichtung wird der Abluftstrom A von 15°C auf 25°C erhitzt, wobei diese Stufe im Wärmeaustausch mit der ersten Stufe der Wärmetauscheranlage verbunden ist. Durch die Erhitzung in der dritten Stufe wird z.B. auch eine Bildung von Kondensat-Aerosolen minimiert.

Die 90°C heiße Luft aus der ersten Stufe wird zum Teil der dritten Stufe zugeführt, um die dort notwendige Erhitzung durchzuführen. Die auf 70°C abgekühlte Luft wird dann wieder der ersten Stufe zugeführt.

Sowohl der Kühlwasserstrom der zweiten Stufe der Wärmetauscheranlage, als auch die Luftströme der ersten und dritten Stufe der Wärmetauscheranlage sind mit der Absorptionskältemaschine gekoppelt.

Die VOC im Abgasstrom A werden in einer Gasturbine mit einer modifizierten Brennkammer (in Fig. 11 nicht dargestellt) mit einer verlängerten Verweilzeit verbrannt. Diese Gasturbine dient somit als Oxidationsvorrichtung 2. Der Oxidationsvorrichtung 2 wird auch Erdgas zugeführt.

Der auf 630°C erhitzte Strom aus der Gasturbine wird über einen Wärmetauscher geführt, der den Strom auf 190°C abkühlt. Die dabei anfallende Wärme kann wieder der Trockenvorrichtung zugeführt werden. Dabei ist ein Luft-Luft-Wärmeaustausch möglich. Es ist auch ein Luft / Dampf (Sattdampf) Wärmeaustausch oder eine Versorgung mit Thermoöl möglich.

Die Wärmerückgewinnung der Abwärme der gereinigten Abluft erfolgt an Warmwasser bei 90°C. Das Warmwasser wird über die Absorptionskältemaschine in Kaltwasser konvertiert, welches dann zur Kühlung des Abluftstroms A vor der Gasturbine verwendet wird.

### Bezugszeichenliste

- 1: Oxidationsvorrichtung (Brenner, thermische Nachverbrennungsvorrichtung)
- 2: Dampferzeugervorrichtung
- 3: erste Turbinenvorrichtung
- 4: Adsorptions-Desorptionsvorrichtung, Absorptions-Desorptionsvorrichtung
- 5: zweite Turbinenvorrichtung
- 6: Brennkammer einer Turbinenvorrichtung

- 11: erster Fluidstrom (Abgas, VOC-reicher Abgasstrom)
- 21: zweiter Fluidstrom (Dampfstrom)
- 31: heißer Abgasstrom einer Turbinenvorrichtung

- 41: Adsorptionszone / Adsorptionsteil der Adsorption-Desorptionsvorrichtung
- 42: Desorptionszone / Desorptionsteil der Adsorption-Desorptionsvorrichtung
- 43: Kühlzone der Adsorption-Desorptionsvorrichtung
- 44: Abgasstrom aus der Adsorption-Desorptionsvorrichtung
- 45: Flächenbrenner

- 51: Generator
- 52: Kondensator
- 53: Entgaser
- 54: Pumpvorrichtung

- 61: erster Wärmetauscher
- 62: zweiter Wärmetauscher
- 63: dritter Wärmetauscher

- 70: Katalysatorvorrichtung

- A: Abluftstrom
- E: brennbarer Energieträger (Erdgas)
- L: Luft
- M: Antriebsmotor
- S: elektrischer Strom
- W: Kesselspeisewasser, Wasser

## Patentansprüche

1. Abluftreinigungsverfahren für einen Abluftstrom (A), insbesondere für einen Abluftstrom aus einer Lackiererei, einer Druckerei oder einer Lebensmittelverarbeitungsanlage, mit mindestens einer brennbaren Komponente in einer Abluftreinigungsvorrichtung umfassend mindestens eine Turbinenvorrichtung (3) mit einer Brennkammer (6) zur Erzeugung von elektrischen Strom (S), eine der Turbinenvorrichtung vorgeschaltete Adsorptions-Desorptionsvorrichtung (4), die als Rotationsadsorber ausgelegt ist, mit einem Adsorptionsteil (41), einer Kühlzone (43) und einem Desorptionsteil (42), einen ersten Wärmetauscher (61), einen zweiten Wärmetauscher (62) und einem der Turbinenvorrichtung nachgeschalteten Katalysator (70);
**gekennzeichnet durch** die folgenden Schritte:
- Einführen eines Großteils des Abluftstroms (A) in den Adsorptionsteil (41) zur Reinigung, der nach der Reinigung die Anlage als Reingas G über den Kamin verlässt;
- Einführen des kleineres Teil des Abluftstroms (A) in die Kühlzone (43) des Desorptionsteil (42) zur Kühlung des Desorptionsteiles, der nach Verlassen der Kühlzone (43) in dem ersten Wärmetauscher (61) durch Katalysatorreingas aus dem Katalysator (70) erwärmt wird;
- Durchführen des im Wärmetauscher (61) erwärmten Stroms durch den Desorptionsteil (42), wobei die brennbare Komponente im Desorbat angereichert wird;
- Abkühlen des erwärmten, mit der brennbaren Komponente angereicherten Desorbates in dem zweiten Wärmetauscher (62) und anschließender Wiedererwärmung;
- Verbrennen des Desorbats als erster Fluidstrom (11) zusammen mit Brennstoff in der Brennkammer (6) der Turbinenvorrichtung (3), wodurch die Turbinenvorrichtung (3) zur Erzeugung von elektrischem Strom (S) angetrieben wird;
- Reinigung des Abgases der Turbinenvorrichtung (3) im Katalysator (70).
wobei Volumenstromschwankungen durch eine Zuluftregelung L ausgeglichen werden.

2. Abluftreinigungsverfahren nach Anspruch 1, **dadurch gekennzeichnet, dass** der zu behandelne Volumenstrom des Abluftstroms A 35.000 m³/h (Normbedingungen) beträgt und eine Beladung mit brennbaren Komponenten von im Mittel ca. 300 mgC/m³ aufweist.

3. Abluftreinigungsverfahren nach einem der vorhergehenden Ansprüche, **dadurch gekennzeichnet, dass** der kleinere Teil des Abluftstroms (A), der in die Kühlzone (43) eingeführt wird, einer Aufkonzentration im Verhältnis von z.B. 1 : 15 entspricht.

4. Abluftreinigungsverfahren nach einem der vorhergehenden Ansprüche, **dadurch gekennzeichnet, dass** die Wiedererwärmung des Desorbats nach dem zweiten Wärmetauscher (62) nach einem Lüftungswerk erfolgt.

5. Abluftreinigungsverfahren nach einem der vorhergehenden Ansprüche, **dadurch gekennzeichnet, dass** die Restwärme des Turbinenabgases der Aufheizung des Desorptionsgases im ersten Wärmetauscher (61) und der Wärmeerzeugung der Produktion über ein Heißwassersystem (63) dient.

6. Abluftreinigungsvorrichtung zur Durchführung eines Abluftreinigungsverfahrens nach einem der vorhergehenden Ansprüche
umfassend
- einen Rotationsadsorber als Adsorptions-Desorptionsvorrichtung (4) mit einem Adsorptionsteil (41), einer Kühlzone (43) und einem Desorptionsteil (42),
- einen ersten Wärmetauscher (61) und einen zweiten Wärmetauscher (62),
wobei der zweite Wärmetauscher (62) stromabwärts von der Adsorptions-Desorptionsvorrichtung (4) vorgesehen ist, und
- mindestens eine Turbinenvorrichtung (3) mit einer Brennkammer (6) zur Erzeugung von elektrischen Strom (S) stromabwärts von der Adsorptions-Desorptionsvorrichtung (4) und stromabwärts von dem zweiten Wärmetauscher (62 , und
- einen Katalysator (70) stromabwärts von der mindestens einen Turbinenvorrichtung (3).

## Claims

1. Exhaust air purification process for an exhaust air stream (A), in particular for an exhaust air stream from a paint shop, a printing plant or a food processing plant, with at least one combustible component
in an exhaust air purification device comprising at least one turbine device (3) with a combustion chamber (6) for generating electric current (S), an adsorption-desorption device (4) connected upstream of the turbine device, which is designed as a rotary adsorber, with an adsorption part (41), a cooling zone (43) and a desorption part (42), a first heat exchanger (61), a second heat exchanger (62) and a catalyst (70) connected downstream of the turbine device;
**characterized by** the following steps:
- Introducing a large part of the exhaust air stream (A) into the adsorption section (41) for purification, which leaves the plant as clean gas G via the chimney after purification;
- Introducing the smaller part of the exhaust air stream (A) into the cooling zone (43) of the desorption section (42) for cooling the desorption section, which after leaving the cooling zone (43) is heated in the first heat exchanger (61) by catalyst clean gas from the catalyst (70);
- Passing the stream heated in the heat exchanger (61) through the desorption section (42), enriching the combustible component in the desorbate;
- Cooling of the heated desorbate enriched with the combustible component in the second heat exchanger (62) and subsequent reheating;
- Burning the desorbate as a first fluid stream (11) together with fuel in the combustion chamber (6) of the turbine device (3), thereby driving the turbine device (3) to generate electric power (S);
- Purifying the exhaust gas from the turbine device (3) in the catalytic converter (70).
whereby volume flow fluctuations are compensated by a supply air control L.

2. Exhaust air purification process according to claim 1, **characterized in that** the volumetric flow of the exhaust air stream A to be treated is 35,000 m³ /h (standard conditions) and has a loading with combustible components of on average about 300 mgC/m³.

3. Exhaust air purification process according to one of the preceding claims, **characterized in that** the smaller part of the exhaust air flow (A) introduced into the cooling zone (43) corresponds to a concentration in the ratio of e.g. 1 : 15.

4. Exhaust air purification process according to one of the preceding claims, **characterized in that** the reheating of the desorbate downstream of the second heat exchanger (62) takes place downstream of a ventilation unit.

5. Exhaust air purification process according to one of the preceding claims, **characterized in that** the residual heat of the turbine exhaust gas is used to heat the desorption gas in the first heat exchanger (61) and to generate heat for production via a hot water system (63).

6. Exhaust air purification device for carrying out an exhaust air purification process according to one of the preceding claims.
comprising
- a rotary adsorber as adsorption-desorption device (4) with an adsorption part (41), a cooling zone (43) and a desorption part (42),
- a first heat exchanger (61) and a second heat exchanger (62),
wherein the second heat exchanger (62) is provided downstream of the adsorption-desorption device (4), and
- at least one turbine device (3) having a combustion chamber (6) for generating electric current (S) downstream of the adsorption-desorption device (4) and downstream of the second heat exchanger (62), and
- a catalyst (70) downstream of the at least one turbine device (3).

## Revendications

1. Procédé de purification d'air sortant pour un flux d'air sortant (A), en particulier pour un flux d'air sortant provenant d'un atelier de peinture, d'un atelier d'impression ou d'une installation de transformation de produits alimentaires, avec au moins un composant combustible dans un dispositif de purification d'air sortant, comprenant au moins un dispositif de turbine (3) avec une chambre de combustion (6) pour produire un courant électrique (S), un dispositif d'adsorption-désorption (4) branché en amont du dispositif de turbine, qui est conçu en tant qu'adsorbeur rotatif, avec une partie d'adsorption (41), une zone de refroidissement (43) et une partie de désorption (42), un premier échangeur de chaleur (61), un deuxième échangeur de chaleur (62) et un catalyseur (70) branché en aval du dispositif de turbine ;
**caractérisé par** les étapes suivantes :
- l'introduction d'une grande partie du flux d'air sortant (A) dans la partie d'adsorption (41) pour la purification, qui quitte l'installation en tant que gaz purifié G par l'intermédiaire de la cheminée après la purification ;
- l'introduction de la plus petite partie du flux d'air sortant (A) dans la zone de refroidissement (43) de la partie de désorption (42) pour le refroidissement de la partie de désorption, qui est chauffée par du gaz purifié de catalyseur provenant du catalyseur (70) dans le premier échangeur de chaleur (61) après avoir quitté la zone de refroidissement (43) ;
- le passage du flux réchauffé dans l'échangeur de chaleur (61) à travers la partie de désorption (42), dans lequel le composant combustible est enrichi dans le désorbant ;
- le refroidissement du désorbant chauffé enrichi du composant combustible dans le deuxième échangeur de chaleur (62) puis le réchauffement ;
- la combustion du désorbant en tant que premier flux de fluide (11) conjointement avec u combustible dans la chambre de combustion (6) du dispositif de turbine (3), ce qui permet d'entraîner le dispositif de turbine (3) pour produire du courant électrique (S) ;
- la purification du gaz sortant du dispositif de turbine (3) dans le catalyseur (70),
dans lequel des fluctuations du flux volumique sont compensées par une régulation d'air entrant L.

2. Procédé de purification d'air sortant selon la revendication 1, **caractérisé en ce que** le flux volumique à traiter du flux d'air sortant A est de 35 000 m³/h (conditions normales) et présente une charge en composants combustibles d'environ 300 mgC/m³ en moyenne.

3. Procédé de purification d'air sortant selon l'une quelconque des revendications précédentes, **caractérisé en ce que** la petite partie du flux d'air sortant (A), qui est introduite dans la zone de refroidissement (43), correspond à une concentration dans le rapport de par exemple 1:15.

4. Procédé de purification d'air sortant selon l'une quelconque des revendications précédentes, **caractérisé en ce que** le réchauffement du désorbant est effectué après le deuxième échangeur de chaleur (62) après un mécanisme d'aération.

5. Procédé de purification d'air sortant selon l'une quelconque des revendications précédentes, **caractérisé en ce que** la chaleur résiduelle des gaz sortants de turbine sert à chauffer le gaz de désorption dans le premier échangeur de chaleur (61) et à générer de la chaleur de la production par l'intermédiaire d'un système d'eau très chaude (63).

6. Dispositif de purification d'air sortant pour effectuer un procédé de purification d'air sortant selon l'une quelconque des revendications précédentes,
comprenant
- un adsorbeur de rotation en tant que dispositif de désorption d'adsorption (4) avec une partie d'adsorption (41), une zone de refroidissement (43) et une partie de désorption (42),
- un premier échangeur de chaleur (61) et un deuxième échangeur de chaleur (62),
dans lequel le deuxième échangeur de chaleur (62) est prévu en amont du dispositif d'adsorption-désorption (4), et
- au moins un dispositif de turbine (3) avec une chambre de combustion (6) pour générer du courant électrique (S) en aval du dispositif d'adsorption-désorption (4) et en aval du deuxième échangeur de chaleur (62), et
- un catalyseur (70) en aval de l'au moins un dispositif de turbine (3).
